Europäisches Patentamt

European Patent Office

Office européen des brevets

(11) Publication number: **0 634 374 A1**

## EUROPEAN PATENT APPLICATION

(21) Application number: **94109253.8**

(22) Date of filing: **16.06.94**

(51) Int. Cl.6: **C03C 10/16, G11B 5/64,**
**G11B 5/704, G11B 5/84**

(30) Priority: **12.07.93 US 89486**

(43) Date of publication of application:
**18.01.95 Bulletin 95/03**

(84) Designated Contracting States:
**DE FR GB NL**

(71) Applicant: **Corning Incorporated**
**Houghton Park**
**Corning**
**New York 14831 (US)**

(72) Inventor: **Pinckney, Linda Ruth**
**Corning Inc.,**
**Patent Department,**
**SP FR 02-12**
**Corning, NY 14831 (US)**

(74) Representative: **Reinhard, Skuhra, Weise**
**Postfach 44 01 51**
**D-80750 München (DE)**

(54) **Fine-grained canasite glass-ceramics for making memory storage devices.**

(57) This invention relates to the production of glass-ceramic articles, with particular reference to substrates for rigid information disks to be used in magnetic memory storage devices. The glass-ceramic articles are highly crystalline, very fine-grained, and are prepared by heat treating precursor glass articles consisting essentially, expressed in terms of weight percent on the oxide basis, of

| | | | |
|---|---|---|---|
| $SiO_2$ | 50-65 | $K_2O$ | 6-12 |
| CaO | 18-25 | $Al_2O_3$ | 0-2.5 |
| $Na_2O$ | 6-11 | F | 5-9 |

for at least two hours at a temperature within the range of about 625°-700°C. Canasite crystals constitute essentially the sole crystal phase, these crystals averaging no more than about 1μm in length and no more than abort 0.5μm in width.

FIG. I

Rank Xerox (UK) Business Services
(3.10/3.09/3.3.4)

The invention relates to canasite-type fine grained glass-ceramics for rigid magnetic storage disks and a method of making same.

United States Patent 4,386,162 discloses the preparation of glass-ceramic articles wherein canasite and/or agrellite and/or fedorite crystals comprise the predominant crystal phase(s).

The patent notes that the crystals typically exhibit widths of about 0.25-2 $\mu$m and lengths of about 1-25 $\mu$m. The working examples show the sometime additional presence of fluorite ($CaF_2$) crystals.

United States Patent 4,971,932 describes the fabrication of magnetic memory storage devices and particularly rigid information disks for use therein, the disks consisting essentially of a glass-ceramic substrate having a coating of magnetic media on the surface thereof, especially of glass-ceramics wherein the predominant crystal phase has a sheet silicate, more preferably a chain silicate microstructure, and most preferably canasite crystals.

Substrates of some of these compositions were especially desirable by having

(1) high body strength and fracture toughness is evidenced by modulus of rupture values in the vicinity of 40,000 psi (~280 MPa) and $K_{IC}$ values in the vicinity of 5 MPa $\sqrt{m}$;

(2) an elastic modulus similar to aluminum;

(3) a hard surface hardness as indicated by a Knoop hardness greater than 500, as opposed to less than 100 for aluminum;

(4) excellent chemical durability in moist environments; and

(5) flat and smooth surfaces of high precision.

Nevertheless, as the technology of the fabrication of magnetic memory storage devices has progressed, the criticality of the substrate surface to be defect-free and non-porous has assumed ever increasing significance. Hence, the fabricators of such devices have demanded that the substrates have very smooth, polished surfaces which enable the use of ultra-low flying heights for read/write heads which, in turn, permits more data to be encoded on a disk. Microscopic examination of the disks has found the sometime presence of submicron-sized pits in the surfaces thereof. The formation of such pits has been traced to differential polishing and pluckout of crystals in the surface.

Therefore, the principal objective of the present invention is to eliminate the formation of those pits, thereby allowing smaller bit sizes with consequent higher bit densities.

A second objective is to produce a smoother polished surface by providing a finer microstructure in the glass-ceramic.

The typical heat treatment for transforming the precursor glass to a glass-ceramic body containing canasite as the predominant crystal phase marketed by Corning Incorporated, Corning, New York as Corning Code 9634 has comprised an initial nucleation step of about one hour within the range of 600°-650°C, followed by a crystallization step of one hour or more within the range of 800°-890°C. That sequence of temperature exposures yields a highly crystalline material, i.e., more than 90% by volume crystalline, with a microstructure consisting of randomly oriented, tightly interlocked, bladed canasite crystals in a matrix of residual glass and fluorite crystals. The canasite crystals are generally 3-10 microns in length with diameters of 0.5-1$\mu$m.

The fluorite crystal phase actually exists in two forms. First, it serves as the nucleating sites upon which canasite crystals nucleate and grow. Those minute fluorite crystals may reach a diameter of at most 0.1$\mu$m. Second, at crystallization temperatures, i.e., temperatures in excess of 700°C, secondary fluorite grows in pockets of siliceous residual glass. The resultant microstructure consists of both canasite crystals and crystals or crystalline agglomerates of fluorite. These crystals/crystalline agglomerates range in size from less than 0.1$\mu$m to over 1$\mu$m in diameter.

As can be appreciated, the multiphase nature of the final glass-ceramic, i.e., the coexistence of the canasite and secondary fluorite phase, can lead to inhomogeneities in the polished surface texture thereof. Thus, each phase and, to a lesser extent, different crystallographic planes in an anisotropic crystal such as canasite, exhibit dissimilar rates of polishing. Those different rates of polishing can cause pitting on a micro scale during the polishing and subsequent cleaning procedures when applied to multiphase materials. Hence, aggressive polishing and/or cleaning of the substrates has resulted in pluckout of the fluorite agglomerates, leaving small pits about 0.5-1.0$\mu$m in diameter. The extent of pitting can be reduced, of course, by carefully controlling polishing and cleaning, but, as can be recognized, elimination of this secondary phase would allow for more flexible and robust finishing procedures.

As a first approach to eliminating or at least minimizing the concentration of the secondary fluorite phase, it was suggested to reduce the level of the $CaF_2$ component in the bulk composites. A reduction in the $CaF_2$ component, however, can adversely affect nucleation of the canasite crystals; i.e., a lower driving force for phase separation produces fewer fluorite nuclei as sites for crystal growth, which circumstance, in turn, results in undesirably larger canasite crystals. This can result in a decrease in strength and, even more importantly, can yield a rougher polished surface that is unacceptable for rigid disk substrates.

Therefore, a specific goal of the present invention was to devise means for controlling the amount of secondary fluorite crystals without resort to altering the base bulk composition. Accomplishing that goal would enable the principal objective of the instant invention, viz., to eliminate the formation of surface pits during finishing procedures, to be achieved.

I have found it possible to accomplish that goal by subjecting precursor glass bodies having compositions consisting essentially, expressed in terms of weight percent on the oxide basis, of

| $SiO_2$ | 50-65 | F | 5-9 |
|---------|-------|---------|-------|
| CaO | 18-25 | $K_2O$ | 6-12 |
| $Na_2O$ | 6-11 | $Al_2O_3$ | 0-2.5 |

to a relatively long exposure, i.e., at least two hours, at temperatures between about 625°-700°C. The resultant bodies are strong, very fine-grained and highly monophase canasite glass-ceramics having a microstructure which is highly crystalline (>80% by volume) and composed of tightly interlocked, blade-shaped canasite crystals averaging no more than about 1$\mu$m in length and no more than about 0.5$\mu$m in width. The glass-ceramic exhibits modulus of rupture values of 20-30 kpsi and fracture toughness values of 2.0-3.5 MPa$\surd$m.

The more preferred precursor glass compositions will be within the ranges also more preferred in Patent No. 4,971,972; viz., glasses consisting essentially, expressed in terms of weight percent on the oxide basis, of

| $SiO_2$ | 55-60 | F | 5-7.5 |
|---------|-------|---------|---------|
| CaO | 20-23 | $K_2O$ | 8-9.5 |
| $Na_2O$ | 7.5-9 | $Al_2O_3$ | 1.5-2.5 . |

To assure the desired very high level of crystallinity, heat treating periods in excess of two hours may be required, e.g., 8-12 hours, particularly at temperatures in the cooler region of the effective range. Very long exposure periods can be tolerated, but will obviously be uneconomical from a commercial viewpoint. Therefore, an exposure period of 12 hours has been deemed to comprise a practical maximum, with 2-8 hours being preferred. It is well within the skill of the worker in the glass-ceramic art, however, to devise, through a few experiments, the most economically practical heat treatment schedule to produce the most desirable crystal microstructure.

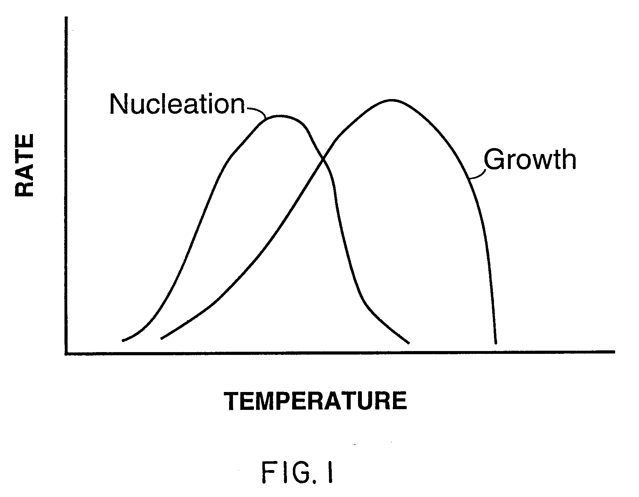

Essentially complete crystallization at such low temperatures, i.e., temperatures where the viscosity of the glass ranges about $10^9$-$10^{12}$ poises (~$10^8$-$10^{11}$Pa.s), is unusual for a silicate-based glass-ceramic. It is achievable in this composition system because the nucleation and growth rate curves of the canasite and fluorite phases significantly overlap in temperature, as is illustrated in FIGURE 1. Consequently, by judiciously choosing a temperature and exposing the body for a long period of time, the glass can be brought isothermally through the "nucleation" and "crystallization" stages in a carefully controlled manner. These temperatures are so low that the driving force for phase separation and growth of the secondary fluorite is minimized, thereby resulting in a crystalline microstructure consisting essentially only of the minute fluorite nucleating crystals, the canasite crystals, grown on those nucleating crystals, and residual glass in the interstices.

In addition, the very fine-grained uniform microstructure produced by this low temperature heat treatment practice offers a key advantage in the preparation of substrates for memory disks. The magnetic memory storage device manufacturers are continually moving toward ever higher bit densities, with more data being written onto the same areas of disk using smaller bit sizes. In order to access these data, read/write heads are "flying" ever closer to the disk. Developments are currently underway to make flying heights of 1.5 microinches (< 50nm) routine. Those developments hold at least two vital implications for disk substrates:

(1) Ultra-low flying heights necessitate very flat, very smooth surfaces. The subtle surface textures currently required for stiction optimization will most likely become smoother or even be eliminated altogether, possibly with the addition of "landing zones", such as are disclosed in United States Application Serial No. 08/63,768, filed May 20, 1993 by J.W. Alpha under the title DISK SUBSTRATE FOR MAGNETIC MEMORY DEVICES and assigned to the same assignee as the present application. Contact recording will mandate ultra-smooth surfaces.

(2) Smaller bit sizes necessitate the elimination of any micro pits in the surface of the disk.

Atomic force microscopy images of polished surfaces of the inventive highly crystalline materials suggest average roughness (Ra) values of 1.2-2.0nm and peak-to-valley values of 16nm or less. Surface evaluation using a Wyko Surface Analyzer (an optical interferometric technique) provided Ra values of less than 1.0nm. Those values were reported on sample surfaces which were subjected to a quick and simple polish. No attempt was made to optimize the polishing or cleaning procedures.

Brief Description of the Drawings

FIGURE 1 consists of a schematic representation illustrating the overlap of the nucleation and growth rate curves of the canasite and fluorite phases.

FIGURES 2A, 2B, and 2C consist of replica electron micrographs illustrating the microstructure of the inventive glass-ceramics.

Description of Preferred Embodiments

The following table records several glass compositions, expressed in terms of parts by weight on the oxide basis, illustrating the effectiveness of the present inventive method. Because it is not known with which cation(s) the fluoride is combined, it is simply reported in terms of fluoride, in accordance with conventional glass and glass-ceramic analysis practice. Furthermore, because the sum of the individual constituents in each glass closely approximates 100, for all practical purposes each tabulated value may be considered to represent weight percent. The actual batch ingredients can comprise any materials, either oxides or other compounds, which, when melted together, will be converted into the desired oxides in the proper properties. To illustrate, $CaCO_3$ and $K_2CO_3$ can serve as the batch materials for CaO and $K_2O$, respectively.

The batch ingredients were compounded, ballmilled together to aid in obtaining a homogeneous melt, and then charged into platinum crucibles. After covering, the crucibles were moved into a furnace operating at about 1325°C and the batches melted for about 3 hours. Thereafter, the crucibles were withdrawn from the furnace, the melts were poured into steel molds to produce rectangular glass slabs having the dimensions of about 6" x 6" x 0.5" (~15.2 X 15.2 X 1.3 cm), and those slabs transferred immediately to an annealer operating at about 550°C.

Volatilization of fluoride during melting and forming was low, viz., less than 10%.

It will be appreciated that the above description of mixing, melting, and forming procedures reflects laboratory activity only and that the glass compositions operable in the subject invention are capable of being processed employing mixing, melting, and forming procedures conventionally utilized in commercial glass making. Hence, it is only necessary that the batch components be thoroughly blended together, melted at a sufficiently high temperature for a sufficient length of time to secure a homogeneous melt, and subsequently shaped into a glass article.

4

Table I

| | 1 | 2 | 3 | 4 |
|---|---|---|---|---|
| $SiO_2$ | 57.3 | 57.3 | 57.3 | 57.3 |
| CaO | 20.2 | 20.2 | 20.2 | 20.2 |
| $Na_2O$ | 8.0 | 8.0 | 8.0 | 8.0 |
| $K_2O$ | 8.8 | 8.8 | 8.8 | 8.8 |
| $Al_2O_3$ | 2.0 | 2.0 | 2.0 | 2.0 |
| F | 6.4 | 6.1 | 5.8 | 5.5 |
| | 5 | 6 | 7 | 8 |
| $SiO_2$ | 56.3 | 56.0 | 55.6 | 54.2 |
| CaO | 21.2 | 20.1 | 23.2 | 24.3 |
| $Na_2O$ | 7.1 | 8.0 | 9.5 | 9.3 |
| $K_2O$ | 10.7 | 9.0 | 7.2 | 7.0 |
| $Al_2O_3$ | 1.0 | -- | -- | -- |
| F | 6.3 | 6.3 | 7.4 | 8.4 |
| $ZrO_2$ | -- | 3.0 | -- | -- |

Table II records eight different heat treatments to which the glass slabs were exposed in an electrically-heated furnace. In all instances, following the hold period the electric current to the furnace was cut off and the samples cooled at room temperature (R.T.) while retained within the furnace. That type of cooling has been termed "cooling at furnace rate", i.e., at about 3°-5°C/minute. The crystallized articles demonstrated a white appearance and contained crystals demonstrating an interlocking, lath-like morphology.

## Table II

### Heat Treatment A:
Heat R.T. to 850°C at 300°C/hour. Hold at 850°C two hrs

### Heat Treatment B:
Heat R.T. to 800°C at 300°C/hour. Hold at 800°C two hrs

### Heat Treatment C:
Heat R.T. to 750°C at 300°C/hour. Hold at 750°C two hrs

### Heat Treatment D:
Heat R.T. to 700°C at 300°C/hour. Hold at 700°C two hrs

### Heat Treatment E:
Heat R.T. to 650°C at 300°C/hour. Hold at 650°C eight hrs

### Heat Treatment F:
Heat R.T. to 650°C at 100°C/hour. Hold at 650°C six hours.

### Heat Treatment G:
Heat R.T. to 600°C at 300°C/hour. Hold at 600°C for one hour. Heat from 600°C to 850°C at 300°C/hour. Hold at 850°C two hours.

### Heat Treatment H
Heat R.T. to 625°C at 100°C/hour. Hold at 625°C four hours.

Table III reports the heat treatment schedule applied to the individual samples along with a measure of the intensity of the strongest fluorite peak, viz., at 1.94Å, in an x-ray powder diffraction trace. Because $CaF_2$ serves as the nucleating agent, there is always a minor amount present. That d-spacing coincides with a minor canasite peak of about 10% as well. It has been observed that each of the three fluorite peaks coincides with one of the many canasite peaks. The breadth of a diffraction peak provides an indication of the amount and crystalline size of a phase. For example, a broad peak indicates that the fluorite is present as the very fine-grained (<0.1μm) nucleating phase. The presence of such crystallization has been confirmed through scanning electron microscopy. With respect to the character of the peak, the following abbreviations have been employed; v = very and sl = slightly.

Table III

| Example | Heat Treatment | Peak Intensity | Peak Breadth |
|---|---|---|---|
| 1 | A | 20% | v. sharp |
| 1 | B | 23% | v. sharp |
| 1 | C | 19% | sharp |
| 1 | D | 16% | sl. broad |
| 1 | E | 8% | v. broad |
| 2 | A | 20% | v. sharp |
| 2 | B | 13% | sharp |
| 2 | C | 14% | sharp |
| 2 | D | 11% | broad |
| 2 | E | 8% | v. broad |
| 3 | A | 9% | sharp |
| 3 | B | 10% | sl. broad |
| 3 | C | 10% | broad |
| 3 | D | 10% | v. broad |
| 3 | E | 7% | v. broad |
| 4 | A | 9% | sl. broad |
| 4 | B | 10% | broad |
| 4 | C | 9% | broad |
| 4 | D | 9% | v. broad |
| 4 | E | 8% | v. broad |
| 5 | F | 9% | broad |
| 5 | G | 11% | sharp |
| 6 | F | 10% | broad |
| 6 | G | 16% | sharp |
| 7 | F | 15% | broad |
| 7 | G | 31% | v. sharp |
| 7 | H | 8% | broad |
| 8 | F | 27% | sharp |
| 8 | G | 29% | v. sharp |
| 8 | H | 11% | broad |

Crystallization was essentially complete in each sample. As observed earlier, the capability of the compositions to achieve such a high level of crystallinity at low temperatures is believed to be due to the fact that the nucleation and growth rate curves of the canasite and fluorite phases overlap in temperature. And, because the temperatures are so low (~625°-700°C), the driving force for phase separation and growth of the secondary fluorite is minimized, thereby, as is illustrated in Table III, yielding a microstructure consisting essentially only of the minute fluorite nucleating crystals, the canasite crystals grown on those nucleating crystals, and residual glass in the interstices. Hence, as can be seen from the tables, the use of nucleation/crystallization temperatures of 625°-700°C can essentially eliminate the generation of a secondary fluorite phase.

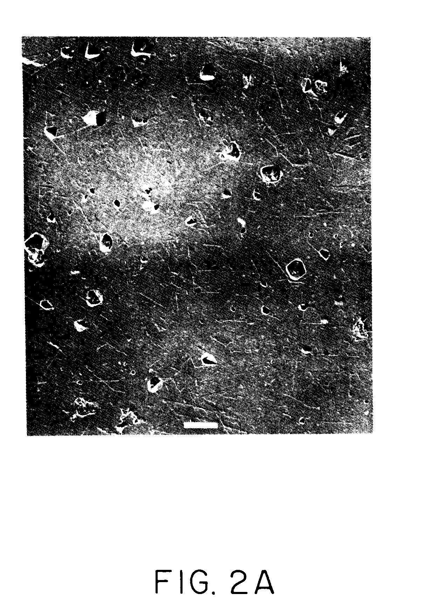

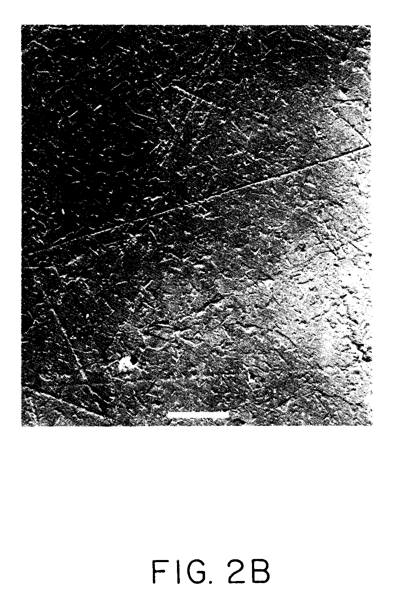

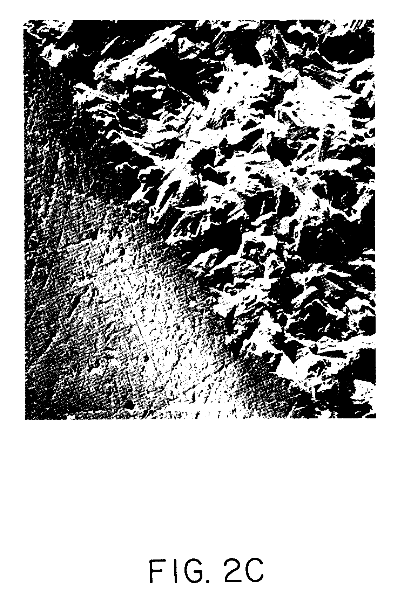

FIGURES 2A through 2C comprise replica electron micrographs of the surface of Example 1 after heat treatments A and E. The surfaces have been lightly etched (one minute in a hot alkaline solution) to highlight the crystal boundaries. FIGURES 2A and 2B show the surface of the high temperature (heat treatment A) and low temperature (heat treatment E) treated samples, respectively. The absence of a secondary fluorite crystal phase is evidenced by the absence of submicron pits in FIGURE 2B. FIGURE 2C provides an over-the-edge view of the pit-free surface after heat treatment E, showing the fracture surface of the material in which the randomly oriented, blade-shaped canasite crystals are clearly seen. The white bar at the base of each micrograph represents a length of $1\mu$m.

The data recorded in Table II indicate that the concept of heat treating at low temperatures to produce a monophase glass-ceramic body is operable over the recited composition ranges. In each case the lower temperature heat treatment yielded strong canasite peaks in x-ray powder diffraction traces along with a very broad, low intensity $CaF_2$ peak indicative of the nucleating phase only. That the technique is applicable to compositions containing relatively high fluorine levels is demonstrated in Examples 7 and 8. It is of interest to note the operability of very low heat treatment temperatures to produce highly crystalline, single phase canasite glass-ceramic bodies. As was stated earlier, this capability of preparing single phase bodies is believed to be due to the overlap in temperature of the nucleation and growth rate curves of the canasite and fluorite phases as schematically represented in FIGURE 1.

The tables also indicate that reducing the concentration of fluoride in the glass composition can lead to a decrease in the amount of secondary fluorite phase. Nevertheless, reducing the fluoride content below about 5% hazards less efficient nucleation with consequent growth of larger-sized crystals and an increase in the level of residual glass. While acceptable for some applications, the resulting microstructure yields a rougher polished surface which is not desirable for substrates for rigid information disks.

**Claims**

1.  A rigid substrate having a coating of magnetic media on the surface thereof facing said magnetic head, the improvement comprising using a disk in which said substrate consists essentially of a highly crystalline, very fine-grained glass-ceramic having a composition consisting essentially, expressed in terms of weight percent on the oxide basis, of

| | | | |
|---|---|---|---|
| $SiO_2$ | 50-65 | $K_2O$ | 6-12 |
| CaO | 18-25 | $Al_2O_3$ | 0-2.5 |
| $Na_2O$ | 6-11 | F | 5-9 |

    wherein tightly interlocked, blade-shaped canasite crystals constitute essentially the sole crystal phase, said crystals averaging no more than about 1 $\mu$m in length and no more than about 0.5 $\mu$m in width.

2.  A magnetic storage disk according to claim 1 wherein said substrate consists essentially of

| | | | |
|---|---|---|---|
| $SiO_2$ | 55-60 | $K_2O$ | 8-9.5 |
| CaO | 20-23 | $Al_2O_3$ | 1.5-2.5 |
| $Na_2O$ | 7.5-9 | F | 5-7.5 . |

3.  Use of the rigid information disk according to claims 1 or 2 in a magnetic memory storage device consisting essentially of said disk and a head pad.

4.  A method for making a very fine-grained glass-ceramic article wherein canasite crystals constitute essentially the sole crystal phase comprising the steps of:
    (a) melting a batch for a glass consisting essentially, expressed in terms of weight percent on the oxide basis, of

| | | | |
|---|---|---|---|
| $SiO_2$ | 50-65 | $K_2O$ | 6-12 |
| CaO | 18-25 | $Al_2O_3$ | 0-2.5 |
| $Na_2O$ | 6-11 | F | 5-9 ; |

    (b) cooling said melt and simultaneously forming a glass body of a desired configuration therefrom; and then

(c) subjecting said glass body to a temperature between about 625°-700°C for a period of time sufficient to cause crystallization in situ of said glass body wherein said crystals have a microstructure which is highly crystalline and composed of tightly interlocked, blade-shaped crystals averaging no more than about $1\mu$m in length and no more than about $0.5\mu$m in width.

5. A method according to claim 4 wherein said period of time ranges about 2-12 hours.

6. A method according to claim 4 wherein said glass consists essentially of

| $SiO_2$ | 55-60 | $K_2O$ | 8-9.5 |
|---------|-------|--------|-------|
| CaO | 20-23 | $Al_2O_3$ | 1.5-2.5 |
| $Na_2O$ | 7.5-9 | F | 5-7.5 . |

FIG. I

FIG. 2A

FIG. 2B

FIG. 2C

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X,D | EP-A-0 384 574 (CORNING INCORPORATED) 29 August 1990 | 1-3 | C03C10/16 G11B5/64 G11B5/704 G11B5/84 |
| Y | * page 3, line 14 - line 21 * <br> * page 3, line 34 - line 40 * <br> * page 4, line 48 - page 5, line 25 * <br> * page 7, line 11 - line 18 * <br> * page 7, line 33 - page 8, line 30 * <br> * claims 1,6-8,12; figure 2 * <br> --- | 6 | |
| X,D | EP-A-0 076 692 (CORNING GLASS WORKS) 13 April 1983 | 4,5 | |
| Y | * page 2, line 22 - page 3, line 8 * <br> ----- | 6 | |

TECHNICAL FIELDS SEARCHED (Int.Cl.6)

G11B
C03C

The present search report has been drawn up for all claims

| Place of search | Date of completion of the search | Examiner |
|---|---|---|
| THE HAGUE | 12 October 1994 | Klocke, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)